# EUROPÄISCHE PATENTSCHRIFT

(11) **EP 2 756 586 B1**
(45) Veröffentlichungstag und Bekanntmachung des Hinweises auf die Patenterteilung: **03.07.2019**
(21) Anmeldenummer: 12769977.5
(22) Anmeldetag: 10.09.2012
(51) Int. Cl.: H02K 11/02, H02K 7/14, F02D 9/00

(54) **VERSCHLUSSVORRICHTUNG FÜR EIN GEHÄUSE**
CLOSURE APPARATUS FOR A HOUSING
DISPOSITIF DE FERMETURE POUR CARTER

(30) Priorität: 12.09.2011 DE 102011082542
(43) Veröffentlichungstag der Anmeldung: 23.07.2014
(73) Patentinhaber: CPT Group GmbH, 30165 Hannover (DE)
(72) Erfinder: WIESE, Peter, 65779 Kelkheim (DE)
(86) Internationale Anmeldenummer: PCT/EP2012/067640
(87) Internationale Veröffentlichungsnummer: WO 2013/037728

(56) Entgegenhaltungen:
- GB-A- 2 256 532
- US-A- 5 656 878

## Beschreibung

Die Erfindung betrifft eine Verschlussvorrichtung für ein Gehäuse, in dem zumindest teilweise ein mechanisch kommutierter Elektromotor angeordnet ist, und einen Stellantrieb, der diese Verschlussvorrichtung aufweist.

Aufgrund sehr hoher elektromagnetischer Verträglichkeits-Anforderungen (EMV-Anforderungen) müssen mechanisch kommutierte Elektromotoren heutzutage aufwändig entstört werden. Dies trifft besonders für mechanisch kommutierte Elektromotoren zu, die in Kraftfahrzeugen eingesetzt werden. Bei mechanisch kommutierten Elektromotoren entstehen durch die ständige Unterbrechung des Stromflusses beim Weiterdrehen eines Ankers elektromagnetische Störungen, welche von dem Elektromotor an die Umgebung abgestrahlt werden. Zur Entstörung der mechanisch kommutierten Elektromotoren kommen meist so genannte Stabkerndrosseln zum Einsatz, die kostengünstig hergestellt werden können. Dieser Drosseltyp dämpft sowohl Gleichtakt- als auch Gegentaktstörungen, die sich im mechanisch kommutierten Elektromotor entwickeln können. Unter Gleichtaktstörungen versteht man hierbei Störströme, die auf allen Versorgungsleitungen des mechanisch kommutierten Elektromotors in gleicher Richtung fließen. Unter Gegentaktstörungen versteht man hierbei elektrische Ströme, die in den Leitungen des mechanisch kommutierten Elektromotors als zu- und abfließende Ströme auftreten. Bei mechanisch kommutierten Elektromotoren können Ströme mit sehr unterschiedlichen Stromstärken auftreten. So können bei mechanisch kommutierten Elektromotoren extrem hohe Blockierströme auftreten, deren Stromstärke ein Vielfaches größer ist als eine Leerlaufstromstärke. Der Blockierstrom charakterisiert einen maximalen Strom, den der Elektromotor aufnimmt bei angelegter Nennspannung, wenn die Achse des Elektromotors blockiert ist. Bei vielen regelungstechnischen Anwendungen steht der mechanisch kommutierte Elektromotor einen Großteil seiner Einsatzzeit in einer Position und nimmt dabei nur wenig Strom auf. Lediglich bei schnellen Positionsänderungen treten kurze Stromspitzen in den Zu- und Ableitungen des mechanisch kommutierten Elektromotors auf, wobei diese Stromspitzen um den Faktor 10 größere Stromstärken aufweisen können als ein mittlerer Strom des Elektromotors. Gerade in Betriebszuständen, bei denen diese Stromspitzen auftreten, kommt es zu elektromagnetischen Störungen.

Zur Unterdrückung der elektromagnetischen Störungen können Stabdrosseln eingesetzt werden, die einen Drosselspulenkern und einen darum gewickelten Drosselspulendraht aufweisen. Üblicherweise umfasst oder besteht der Drosselspulenkern im Wesentlichen aus einem weichmagnetischen Ferrit, dessen relative Permeabilität µᵣ wesentlich größer als 1 ist. Typischerweise liegt die relative Permeabilität µᵣ bei näherungsweise 250, um die Induktivität und damit die Dämpfung zu erhöhen, wobei die Induktivität nicht linear mit der Permeabilität zunimmt. Die Ursache für den nichtlinearen Zusammenhang zwischen der relativen Permeabilität und der Induktivität liegt im Prinzip der Scherung. Wird der Drosselspulenkern aufgrund von hohen Stromspitzen in die Sättigung getrieben, kann dessen Permeabilität zusammenbrechen und auf einen Wert von etwa 1 zurückgehen. Dies kann einen drastischen Einbruch der Dämpfungseigenschaften und damit eine stark reduzierte Entstörwirkung der Drosselspule zur Folge haben. Aus diesem Grund wird der Drosselspulenkern, abhängig von einem zur Verfügung stehenden Bauraum, so groß wie möglich gewählt. Ferner werden die Drosselspulen derart voneinander entfernt angeordnet, dass sie keine oder näherungsweise keine magnetische Kopplung aufweisen. Bei einer additiven Überlagerung der magnetischen Felder von Drosselspulen kann ein Drosselspulenkern bereits bei sehr geringen Strömen in die Sättigung geraten, wodurch eine gewünschte Entstörwirkung der Drosselspulen ausbleiben kann.

US 5,656,878 A beschreibt eine Motor Anschlussvorrichtung für einen Kraftfahrzeug Scheibenwischermotor. Der Kraftfahrzeug Scheibenwischermotor umfasst einen Motorbereich und einen Untersetzungsgetriebebereich. Der Untersetzungsgetriebebereich umfasst ein Getriebegehäuse, in das eine Schnecke und ein Schneckenrad ragen. Ferner umfasst der Untersetzungsgetriebebereich eine Getriebeabdeckung. Die Getriebeabdeckung hat auf ihrer äußeren Oberfläche ein Filterglied, um elektrisches Rauschen des Motorbereichs zu unterdrücken, und ein Behältnis, das das Filterglied aufnimmt. Das Behältnis wird von einer Behältnisabdeckung bedeckt. Das Filterglied umfasst unter anderem Drosselspulen. Die Drosselspulen sind mit Schleifkontakten im Motorbereich gekoppelt.

GB 2, 256, 532 A beschreibt eine Störsignalunterdrückungsdrossel, welche zwei Spulen umfasst. Die Spulen sind mit den Schleifkontakten eines Motors verbunden, wobei die zweite Spule gegensinnig bezüglich der ersten Spule gewunden ist. Die Drossel unterdrückt ein durch den Motor hervorgerufenes Hochfrequenzstörsignal.

Die Aufgabe, die der Erfindung zugrunde liegt, ist es, eine Verschlussvorrichtung für ein Gehäuse, in dem ein mechanisch kommutierter Elektromotor zumindest teilweise angeordnet ist, zu schaffen, die einen Beitrag leistet, Störsignale ausreichend zu dämpfen, die von dem mechanisch kommutierten Elektromotor erzeugt werden. Ferner ist es Aufgabe der Erfindung, einen Stellantrieb zu schaffen, der einen Beitrag leistet, von dem Stellantrieb ausgehende Störsignale möglichst gering zu halten.

Die Aufgabe wird durch die Merkmale der unabhängigen Patentansprüche gelöst. Vorteilhafte Weiterbildungen der Erfindung sind in den Unteransprüchen gekennzeichnet.

Gemäß einem ersten Aspekt zeichnet sich die Erfindung aus durch eine Verschlussvorrichtung für ein Gehäuse, in dem zumindest teilweise ein mechanisch kommutierter Elektromotor angeordnet ist. Die Verschlussvorrichtung umfasst mindestens eine erste stabförmige Drosselspule und eine zweite stabförmige Drosselspule, die gegensinnig mit Spulendraht gewickelt sind und die parallel zueinander angeordnet sind. Die erste Drosselspule ist mit einem ersten Koppelelement elektrisch direkt gekoppelt, das für eine elektrische Kopplung mit dem mechanisch kommutierten Elektromotor vorgesehen ist, und die zweite Drosselspule ist mit einem zweiten Koppelelement elektrisch direkt gekoppelt, das für eine elektrische Kopplung mit dem mechanisch kommutierten Elektromotor vorgesehen ist, so dass sich beim Anschluss des mechanisch kommutierten Elektromotors an die Koppelelemente und Betrieb des mechanisch kommutierten Elektromotors die magnetischen Flüsse in der ersten und zweiten Drosselspule zumindest teilweise kompensieren.

Durch die spiegelsymmetrische Anordnung kompensieren sich die magnetischen Flüsse in den beiden Drosselspulen zumindest teilweise gegenseitig und die beiden Drosselspulen geraten auch bei hoher Bestromung nicht in die Sättigung, so dass ihre entstörende Wirkung durchgehend erhalten bleibt. Vorteilhafterweise können so die Abmessungen der Drosselspulenkerne der beiden Drosselspulen klein gehalten werden, wodurch Bauraum eingespart werden kann und die beiden Drosselspulen kompakt auf engem Raum angeordnet werden können. Dies hat den weiteren Vorteil, dass stromführende Verbindungsleitungen zwischen dem mechanisch kommutierten Elektromotor und den beiden Drosselspulen sehr kurz gehalten werden können, und damit die Verbindungsleitungen nicht oder nur in sehr geringem Maße als Antennen wirken, die Störsignale abstrahlen. Ferner hat die kompakte Anordnung der beiden Drosselspulen den Vorteil, dass die stromführenden Verbindungsleitungen zwischen dem mechanisch kommutierten Elektromotor und den beiden Drosselspulen dicht benachbart geführt werden können. Eine Fläche, die die Verbindungsleitungen einschließen, kann somit sehr gering gehalten werden und eine Abstrahlung von Störsignalen minimiert werden.

Die Anordnung der ersten und zweiten Drosselspule in der Verschlussvorrichtung hat den Vorteil, dass der Elektromotor die Entstörmittel nicht aufweisen muss. Eine Dimensionierung und Anordnung der beiden Drosselspulen kann unabhängig von bauräumlichen Gegebenheiten des Elektromotors erfolgen.

Die Verschlussvorrichtung weist einen Boden auf und die erste Drosselspule und die zweite Drosselspule sind entlang ihrer Mittelachsen parallel zu dem Boden auf und/oder zumindest teilweise in dem Boden angeordnet. Dies ermöglicht eine einfache, platzsparende und/oder mechanisch stabile Anordnung der ersten und zweiten Drosselspule.

In einer vorteilhaften Ausgestaltung sind die erste Drosselspule und die zweite Drosselspule auf einer dem Elektromotor zugewanden Innenseite des Bodens angeordnet. Dies ermöglicht es, die beiden Drosselspulen vor Umwelteinflüssen, zum Beispiel Schmutz und/oder Feuchtigkeit, zu schützen.

Die erste Drosselspule und die zweite Drosselspule weist einen zumindest näherungsweise gleichen Drosselspulendurchmesser auf und das Verhältnis von einem Abstand zwischen der jeweiligen Mittelachse der ersten Drosselspule und der zweiten Drosselspule zu dem Drosselspulendurchmesser ist kleiner als 1,8.

Bei einer Anordnung der beiden Drosselspulen, bei der das Verhältnis von dem Abstand zu dem Drosselspulendurchmesser größer als 1 und kleiner als 3 ist, kompensieren sich die magnetischen Flüsse in den Drosselspulen zumindest teilweise gegenseitig. Für eine verbesserte Störunterdrückung ist es jedoch vorteilhaft, den Abstand nicht zu groß zu wählen. Vorteilhafter ist es daher, ein Verhältnis zu wählen, das zwischen 1,5 und 1,8 liegt.

Das Verhältnis von dem Abstand zwischen der jeweiligen Mittelachse der ersten Drosselspule und der zweiten Drosselspule zu dem Drosselspulendurchmesser ist dabei größer als 1, 5 und kleiner als 1,8. In diesem Bereich der Auslegung überlagern sich die magnetischen Flüsse der beiden Drosselspulen derart, dass sich deren durch den Betriebsstrom des Elektromotors erzeugten Gegentakt-Flüsse etwa zu einem Viertel kompensieren, oder, bezogen auf eine sonst gleiche Anordnung, aber mit gleichsinniger Wicklung der beiden Drosselspulen, auf etwa die Hälfte. Die Induktivität für Gegentakt-Flüsse ist folglich auch auf etwa Dreiviertel des Wertes einer einzelnen Drossel beziehungsweise etwa die Hälfte des Werts bei gleichsinniger Wicklung reduziert. Gleichzeitig erhöhen sich durch die Überlagerung die magnetischen Gleichtakt-Flüsse, welche durch die Gleichtaktströme erzeugt werden, wodurch sich auch die Gleichtakt-Induktivität um ein Drittel, bezogen auf eine Einzeldrossel, beziehungsweise auf etwa das Anderthalbfache des Werts bei gleichsinniger Wicklung erhöht. Dieser Bereich der Auslegung ist somit besonders vorteilhaft, wenn die zu erwartenden Spitzenströme niedriger liegen, in jedem Fall unter 4/3 (vier Drittel) des Sättigungsstroms einer Einzeldrossel und/oder wenn ein ausgewogenes Dämpfungsverhalten für Gegentakt- und Gleichtaktstörungen gefordert wird.

In einer weiteren vorteilhaften Ausgestaltung weist die Verschlussvorrichtung einen Kunststoff auf oder besteht aus dem Kunststoff. Dies ermöglicht eine kostengünstige Herstellung der Verschlussvorrichtung.

Gemäß einem zweiten Aspekt zeichnet sich die Erfindung durch einen Stellantrieb aus, der einen mechanisch kommutierten Elektromotor, ein Gehäuse mit einer Öffnung und eine Verschlussvorrichtung gemäß dem ersten Aspekt aufweist. In dem Gehäuse ist der mechanisch kommutierte Elektromotor zumindest teilweise angeordnet und die Verschlussvorrichtung ist derart mit dem Gehäuse mechanisch gekoppelt, dass sie die Öffnung des Gehäuses verschließt. Der mechanisch kommutierte Elektromotor ist elektrisch mit den Koppelelementen gekoppelt. Vorteilhafte Ausgestaltungen des ersten Aspekts gelten hierbei auch für den zweiten Aspekt.

Ausführungsbeispiele der Erfindung sind im Folgenden anhand der schematischen Zeichnungen erläutert.

Es zeigen:
- Figur 1: ein Ausführungsbeispiel eines Stellantriebs in einer schematischen Explosionsdarstellung,
- Figur 2: eine beispielhafte Detaildarstellung einer Verschlussvorrichtung,
- Figur 3: eine Querschnittsansicht eines Elektromotors,
- Figur 4: eine schematische Darstellung zum Gegentaktverhalten einer ersten Drosselspule und zweiten Drosselspule der Verschlussvorrichtung und
- Figur 5: eine schematische Darstellung zum Gleichtaktverhalten der ersten Drosselspule und der Drosselspule der Verschlussvorrichtung.

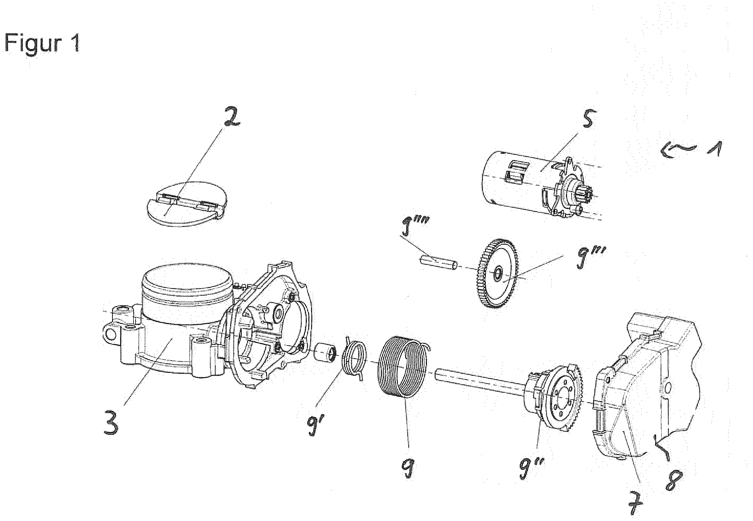

Figur 1 zeigt ein Ausführungsbeispiel eines Stellantriebs 1 in einer schematischen Explosionsdarstellung. Der Stellantrieb 1 weist einen mechanisch kommutierten Elektromotor 5 auf. Der Stellantrieb 1 ist beispielsweise zur Betätigung einer Last 2 ausgebildet. Der Stellantrieb 1 kann in einem Kraftfahrzeug angeordnet sein. Der Stellantrieb 1 kann beispielsweise als Drosselklappen-Stellantrieb 1 eines Verbrennungsmotors genutzt werden und die Last 2 kann eine Drosselklappe umfassen.

Der Stellantrieb 1 weist ferner ein Gehäuse 3 auf. In dem Gehäuse 3 ist der mechanisch kommutierte Elektromotor 5 zumindest teilweise angeordnet. Des Weiteren kann der Stellantrieb 1 beispielsweise ein Getriebe mit mehreren Getriebekomponenten 9 ... 9"" aufweisen. Das Getriebe kann ebenfalls in dem Gehäuse 3 angeordnet sein. Das Gehäuse 3 weist eine Öffnung auf, über die die verschiedenen Elemente des Stellantriebs 1 bei einer Montage des Stellantriebs 1 in das Gehäuse 3 eingebracht werden können. Nach Abschluss der Montage wird diese Öffnung vorzugsweise verschlossen, um die Komponenten des Stellantriebs 1 vor Umwelteinflüssen, zum Beispiel Schmutz und/oder Feuchtigkeit, zu schützen. Hierzu weist der Stellantrieb 1 vorzugsweise eine Verschlussvorrichtung 7 auf.

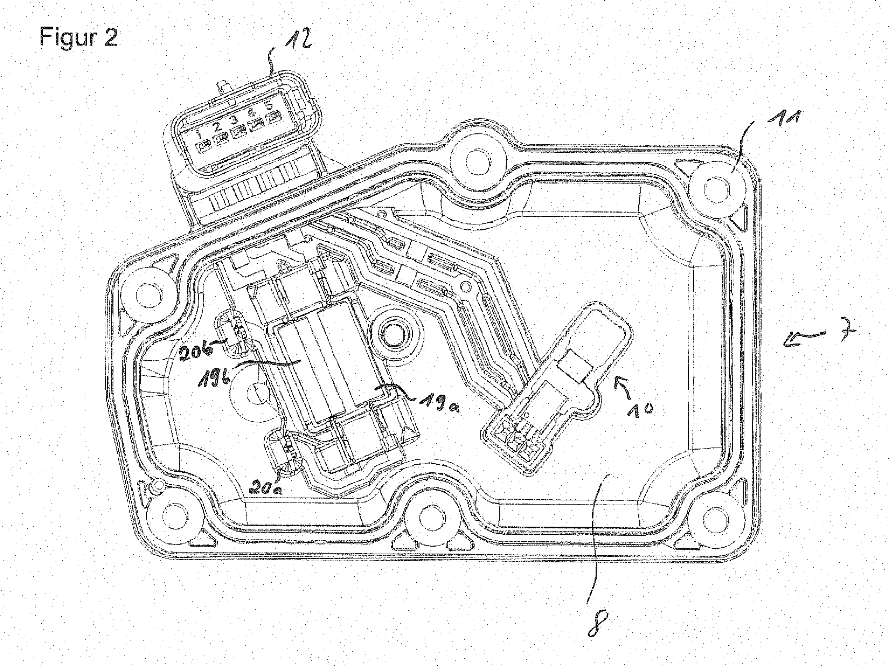

Figur 2 zeigt beispielhaft eine Detaildarstellung der Verschlussvorrichtung 7. Die Verschlussvorrichtung 7 kann des Weiteren ein oder mehrere Sensorelemente 10 aufweisen und/oder weitere Verbindungselemente 11 und/oder Steckverbinderelemente 12. Die Verschlussvorrichtung 7 umfasst mindestens eine erste stabförmige Drosselspule 19a und eine zweite stabförmige Drosselspule 19b, die gegensinnig mit Spulendraht gewickelt sind und die parallel zueinander angeordnet sind. Die erste Drosselspule 19a ist mit einem ersten Koppelelement 20a elektrisch direkt gekoppelt, das für eine elektrische Kopplung mit dem mechanisch kommutierten Elektromotor 5 vorgesehen ist, und die zweite Drosselspule 19b ist mit einem zweiten Koppelelement 20b elektrisch direkt gekoppelt, das für eine elektrische Kopplung mit dem mechanisch kommutierten Elektromotor 5 vorgesehen ist, so dass sich beim Anschluss des mechanisch kommutierten Elektromotors 5 an die Koppelelemente 20a, 20b und Betrieb des mechanisch kommutierten Elektromotors 5 die magnetischen Flüsse Φ1, Φ2 in der ersten Drosselspule 19a und zweiten Drosselspule 19b zumindest teilweise kompensieren.

Die Verschlussvorrichtung 7 weist einen Boden auf und die erste Drosselspule 19a und die zweite Drosselspule 19b sind entlang ihrer Mittelachsen 21a, 21b parallel zu dem Boden auf einer dem Elektromotor 5 zugewanden Innenseite des Bodens angeordnet.

Die beiden Drosselspulen 19a, 19b können somit kompakt auf engem Raum angeordnet werden. Dies hat den Vorteil, dass stromführende Verbindungsleitungen zwischen dem mechanisch kommutierten Elektromotor 5 und den beiden Drosselspulen 19a, 19b sehr kurz gehalten werden können, und damit die Verbindungsleitungen nicht oder nur in sehr geringem Maße als Antennen wirken, die Störsignale abstrahlen. Die Länge der Verbindungsleitungen beispielsweise zwischen Motoranschlussfahnen und der ersten Drosselspule 19a beziehungsweise der zweiten Drosselspule 19b, also der Bereich, welcher noch nicht von den beiden Drosselspulen 19a, 19b gefiltert wird, kann eine Länge von beispielsweise kleiner 25 mm aufweisen. Ferner hat die kompakte Anordnung der beiden Drosselspulen 19a, 19b den Vorteil, dass die stromführenden Verbindungsleitungen zwischen dem mechanisch kommutierten Elektromotor 5 und den beiden Drosselspulen 19a, 19b dicht benachbart geführt werden können, beispielsweise in einem Abstand von ca. 3 mm. Eine Fläche, die die Verbindungsleitungen einschließen, kann somit sehr gering gehalten werden. Die Fläche kann beispielsweise kleiner als 350 mm² sein. Dies ermöglicht vorteilhafterweise, dass ein ausreichendes Abstrahlungsverhalten zumindest unterhalb von einem 1 GHz erreicht werden kann.

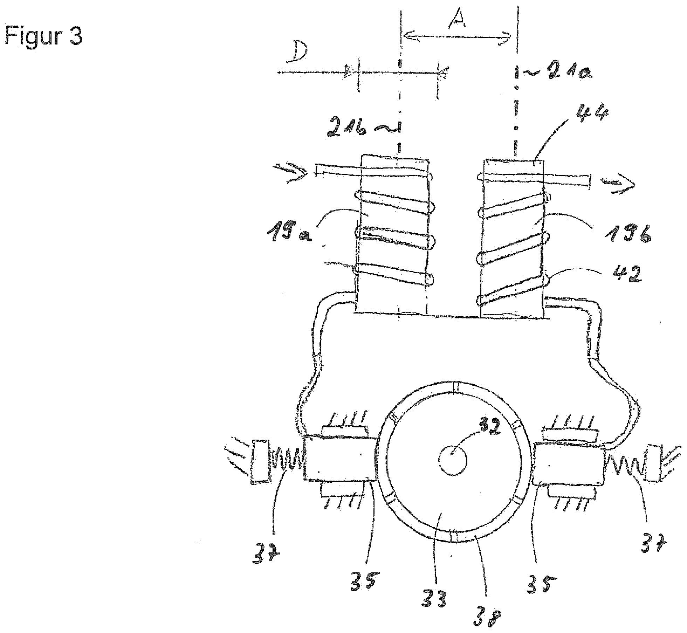

Figur 3 zeigt eine Querschnittsansicht des mechanisch kommutierten Elektromotors 5 senkrecht zu einer Motorwelle 32 des Elektromotors 5. Der Elektromotor 5 weist einen Anker 33 auf. Der Anker 33 ist drehbar mit der Motorwelle 32 gelagert. Am Anker 33 sind beispielsweise Magnetspulen ausgebildet, die mit Ankerwindungen belegt sind. Des Weiteren weist der Elektromotor 5 Bürsten 35 auf, die einen Antriebsstrom für den mechanisch kommutierten Elektromotor 5 zu den Ankerwindungen übertragen. Diese Bürsten 35 werden von Anpressfedern 37 an eine hier nur schematisch dargestellte mechanische Kommutierungseinheit 38 für den elektrischen Strom angepresst. Die Antriebsströme für den mechanisch kommutierten Elektromotor 5 werden über die Bürsten 35 auf die Kommutierungseinheit 38 übertragen. Ferner ist in Figur 3 schematisch eine Anordnung der ersten Drosselspule 19a und zweiten Drosselspule 19b in der Verschlussvorrichtung 7 gezeigt. Zu erkennen ist die gegensinnige Bewicklung der Drosselspulenkerne 44 mit dem Drosselspulendraht 42. Die erste Drosselspule 19a und die zweite Drosselspule 19b weisen zum Beispiel einen zumindest näherungsweise gleichen Drosselspulendurchmesser D auf. Das Verhältnis von einem Abstand A zwischen der jeweiligen Mittelachse 21a, 21b der ersten Drosselspule 19a und der zweiten Drosselspule 19b zu dem Drosselspulendurchmesser D ist größer als 1,5 und kleiner als 1,8. Dadurch, dass die Drosselspulen 19a, 19b derart nahe beieinander angeordnet und gegensinnig mit Spulendraht bewickelt sind, kompensieren sich die magnetischen Flüsse Φ1, Φ2 in den beiden Drosselspulen 19a, 19b zumindest teilweise gegenseitig.

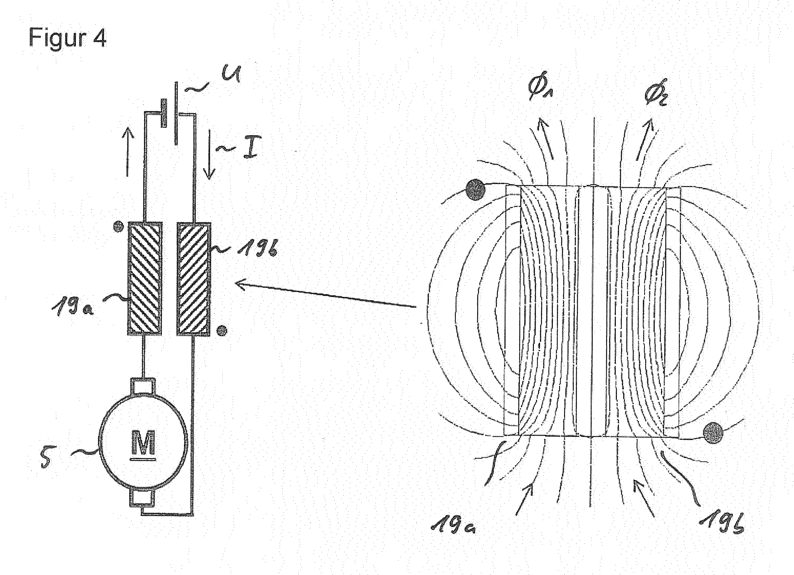

Figur 4 zeigt den mechanisch kommutierten Elektromotor 5, der über die zwei stabförmigen Drosselspulen 19a, 19b und Motoranschlüsse an einer Gleichspannungsquelle angeschlossen ist. Im Folgenden wird anhand der Figur 4 das Gegentaktverhalten der ersten Drosselspule 19a und zweiten Drosselspule 19b veranschaulicht. Ein Gleichstrom, der zur Drehmomentenbildung des Elektromotors 5 benötigt wird, sowie ein Teil eines überlagerten Wechselstroms fließen in den einen Motoranschluss hinein und aus dem anderen heraus. Man spricht deshalb von Gegentaktströmen. Aufgrund der spiegelbildlichen Wicklungen ergeben sich gleichsinnige Flüsse Φ1, Φ2 in der ersten Drosselspule 19a und der zweiten Drosselspule 19b. Die Feldlinien stoßen einander ab, die Induktivität und die magnetische Aussteuerung des Drosselspulenkerns 44 sind für die Gegentaktströme reduziert. Der Drosselspulenkern 44 geht erst bei Strömen mit höheren Stromstärken in seine Sättigung.

Ist das Verhältnis zwischen dem Abstand A und dem Drosselspulendurchmesser D größer als 1 und kleiner als 1,5 (und somit nicht Teil der Erfindung), überlagern sich die magnetischen Flüsse Φ1, Φ2 der beiden Drosselspulen 19a, 19b derart, dass sich deren durch den Gegentaktstrom des Elektromotors 5 erzeugten Gegentakt-Flüsse etwa zur Hälfte kompensieren. Die Induktivität für Gegentaktströme ist folglich auch auf etwa die Hälfte des Wertes einer einzelnen Drossel reduziert. Ist das Verhältnis zwischen dem Abstand A und dem Drosselspulendurchmesser D größer als 1 und kleiner als 1,3 (und somit nicht Teil der Erfindung), überlagern sich die magnetischen Flüsse Φ1, Φ2 der beiden Drosselspulen 19a, 19b derart, dass sich deren durch den Gegentaktstrom des Elektromotors 5 erzeugten Gegentakt-Flüsse etwa zur Hälfte kompensieren. Im Vergleich zu einer sonst gleichen Anordnung, aber mit gleichsinniger Wicklung der beiden Drosselspulen, kompensieren sich die Gegentakt-Flüsse etwa auf ein Viertel. Die Induktivität für Gegentaktströme ist folglich auch auf etwa die Hälfte des Wertes einer einzelnen Drossel beziehungsweise etwa ein Viertel des Werts bei gleichsinniger Wicklung reduziert. Ist das Verhältnis zwischen dem Abstand A und dem Drosselspulendurchmesser D größer als 1,5 und kleiner als 1,8, überlagern sich die magnetischen Flüsse Φ1, Φ2 der beiden Drosselspulen 19a, 19b derart, dass sich deren durch den Gegentaktstrom des Elektromotors 5 erzeugten Gegentakt-Flüsse etwa zu einem Viertel kompensieren, oder, bezogen auf eine sonst gleiche Anordnung, aber mit gleichsinniger Wicklung der beiden Drosselspulen, auf etwa die Hälfte. Die Induktivität für Gegentakt-Flüsse ist folglich auch auf etwa Dreiviertel des Wertes einer einzelnen Drossel beziehungsweise etwa die Hälfte des Werts bei gleichsinniger Wicklung reduziert.

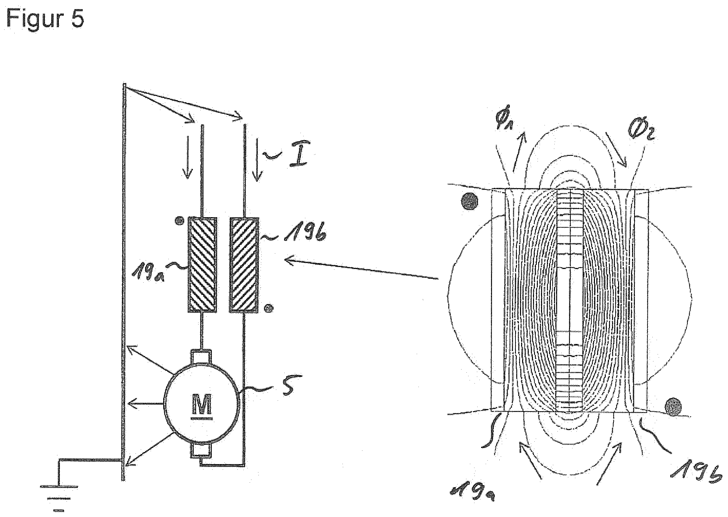

Anhand von Figur 5 wird im Folgenden das Gleichtaktverhalten der ersten Drosselspule 19a und zweiten Drosselspule 19b erläutert. Figur 5 zeigt einen Elektromotor 5, der über die beiden Drosselspulen 19a, 19b mit einer Versorgungsquelle gekoppelt ist. So genannte Gleichtaktströme fließen in beiden Motoranschlüssen gleichsinnig. Der Stromkreis wird geschlossen über Masseverbindungen und/oder parasitäre Kapazitäten. Aufgrund der spiegelbildlichen Wicklungen ergeben sich gegensinnige Flüsse Φ1, Φ2 in den beiden Drosselspulen 19a, 19b. Die Feldlinien ziehen einander an, die Induktivität der Gleichtaktströme ist erhöht. Die magnetische Aussteuerung des Drosselkerns bleibt unkritisch, da die Gleichtaktströme klein gegenüber dem DC-Betriebsstrom des Elektromotors 5 sind.

Ist das Verhältnis zwischen dem Abstand A und dem Drosselspulendurchmesser D größer als 1 und kleiner als 1,5 (und somit nicht Teil der Erfindung), überlagern sich die magnetischen Flüsse Φ1, Φ2 der beiden Drosselspulen 19a, 19b derart, dass sich die durch überlagerte Gleichtaktströme erzeugten Gleichtakt-Flüsse und damit die Gleichtakt-Induktivität verdoppelt. Ist das Verhältnis zwischen dem Abstand A und dem Drosselspulendurchmesser D größer als 1,5 und kleiner als 1,8, erhöhen sich durch die Überlagerung die magnetischen Gleichtakt-Flüsse, welche durch die Gleichtaktströme erzeugt werden, wodurch sich die Gleichtakt-Induktivität um ein Drittel, bezogen auf eine Einzeldrossel, beziehungsweise auf etwa das Anderthalbfache des Werts bei gleichsinniger Wicklung erhöht.

## Patentansprüche

1. Verschlussvorrichtung (7) für ein Gehäuse (3), in dem zumindest teilweise ein mechanisch kommutierter Elektromotor (5) angeordnet ist, bei der die Verschlussvorrichtung (7) mindestens eine erste stabförmige Drosselspule (19a) und eine zweite stabförmige Drosselspule (19b) umfasst, die parallel zueinander angeordnet sind, wobei
- die erste Drosselspule (19a) mit einem ersten Koppelelement (20a) elektrisch direkt gekoppelt ist, das für eine elektrische Kopplung mit dem mechanisch kommutierten Elektromotor (5) vorgesehen ist und die zweite Drosselspule (19b) mit einem zweiten Koppelelement (20b) elektrisch direkt gekoppelt ist, das für eine elektrische Kopplung mit dem mechanisch kommutierten Elektromotor (5) vorgesehen ist, und
- die Verschlussvorrichtung (7) einen Boden (8) aufweist und die erste Drosselspule (19a) und die zweite Drosselspule (19b) entlang ihrer Mittelachsen (21a, 21b) parallel zu dem Boden (8) auf und/oder zumindest teilweise in dem Boden angeordnet sind **dadurch gekennzeichnet dass**,
- die erste stabförmige Drosselspule (19a) und die zweite stabförmige Drosselspule (19b) gegensinnig mit Spulendraht (27) gewickelt sind, so dass sich beim Anschluss des mechanisch kommutierten Elektromotors (5) an die Koppelelemente (20a, 20b) und Betrieb des mechanisch kommutierten Elektromotors (5) die magnetischen Flüsse (Φ1, Φ2) in den Drosselspulen (19a, 19b) zumindest teilweise kompensieren, und
- das Verhältnis von dem Abstand (A) zwischen der jeweiligen Mittelachse (21a, 21b) der ersten Drosselspule (19a) und der zweiten Drosselspule (19b) zu dem Drosselspulendurchmesser (D) größer als 1,5 und kleiner als 1,8 ist.

2. Verschlussvorrichtung (7) nach Anspruch 1, bei der die erste Drosselspule (19a) und die zweite Drosselspule (19b) auf einer dem Elektromotor (5) zugewandten Innenseite des Bodens (8) angeordnet sind.

3. Verschlussvorrichtung (7) nach einem der vorstehenden Ansprüche,
bei der die Verschlussvorrichtung (7) einen Kunststoff aufweist oder aus dem Kunststoff besteht.

4. Stellantrieb (1), der aufweist
- einen mechanisch kommutierten Elektromotor (5)
- ein Gehäuse (3), in dem der mechanisch kommutierte Elektromotor (5) zumindest teilweise angeordnet ist und das eine Öffnung aufweist und
- eine Verschlussvorrichtung (7) nach einem der Ansprüche 1 bis 3, die derart mit dem Gehäuse (3) mechanisch gekoppelt ist, dass sie die Öffnung des Gehäuses (3) verschließt, und bei dem der mechanisch kommutierte Elektromotor (5) elektrisch mit den Koppelelementen (20a, 20b) gekoppelt ist.

## Claims

1. Closure apparatus (7) for a housing (3), in which a mechanically commutated electric motor (5) is arranged at least partially, in which the closure apparatus (7) comprises at least a first rod-shaped inductor coil (19a) and a second rod-shaped inductor coil (19b), which are arranged parallel to one another, wherein
- the first inductor coil (19a) is coupled electrically directly to a first coupling element (20a), which is provided for an electrical coupling to the mechanically commutated electric motor (5), and the second inductor coil (19b) is coupled electrically directly to a second coupling element (20b), which is provided for an electrical coupling to the mechanically commutated electric motor (5), and
- the closure apparatus (7) has a base (8), and the first inductor coil (19a) and the second inductor coil (19b) are arranged along their mid-axes (21a, 21b) parallel to the base (8) on and/or at least partially in the base, **characterized in that** coil wire (27) is wound around the first rod-shaped inductor coil (19a) and the second rod-shaped inductor coil (19b) with the opposite winding sense, with the result that on connection of the mechanically commutated electric motor (5) to the coupling elements (20a, 20b) and during operation of the mechanically commutated electric motor (5), the magnetic fluxes (Φ1, Φ2) in the inductor coils (19a, 19b) are at least partially compensated for, and the ratio of the distance (A) between the respective mid-axis (21a, 21b) of the first inductor coil (19a) and the second inductor coil (19b) to the inductor coil diameter (D) is greater than 1.5 and less than 1.8.

2. Closure apparatus (7) according to Claim 1,
in which the first inductor coil (19a) and the second inductor coil (19b) are arranged on an inner side of the base (8), said inner side facing the electric motor (5).

3. Closure apparatus (7) according to one of the preceding claims,
in which the closure apparatus (7) comprises a plastic or consists of the plastic.

4. Servo drive (1), which has
- a mechanically commutated electric motor (5),
- a housing (3), in which the mechanically commutated electric motor (5) is arranged at least partially and which has an opening, and
- a closure apparatus (7) according to one of claims 1 to 3, which is coupled mechanically to the housing (3) in such a way that it closes the opening of the housing (3), and in which the mechanically commutated electric motor (5) is coupled electrically to the coupling elements (20a, 20b).

## Revendications

1. Dispositif de fermeture (7) destiné à un carter (3), dans lequel un moteur électrique à commutation mécanique (5) est agencé au moins partiellement, dans lequel le dispositif de fermeture (7) comprend au moins une première bobine de réactance en forme de barreau (19a) et une deuxième bobine de réactance en forme de barreau (19b) qui sont disposées parallèlement l'une à l'autre, dans lequel
- la première bobine de réactance (19a) est directement couplée électriquement à un premier élément de couplage (20a) prévu pour le couplage électrique au moteur électrique à commutation mécanique (5), et la deuxième bobine de réactance (19b) est directement couplée électriquement à un deuxième élément de couplage (20b) prévu pour le couplage électrique au moteur électrique à commutation mécanique (5), et
- le dispositif de fermeture (7) comporte un fond (8) et la première bobine de réactance (19a) et la deuxième bobine de réactance (19b) sont disposées le long de leurs axes centraux (21a, 21b) parallèlement au fond (8) et/ou au moins partiellement dans le fond,
**caractérisé en ce que**
- la première bobine de réactance en forme de barreau (19a) et la deuxième bobine de réactance en forme de barreau (19b) sont enroulées dans des sens opposés avec du fil de bobine (27), de sorte que lors du raccordement du moteur électrique à commutation mécanique (5) aux éléments de couplage (20a, 20b) et du fonctionnement du moteur électrique à commutation mécanique (5), les flux magnétiques (φ1, φ2) dans les bobines de réactance (19a, 19b) se compensent au moins partiellement, et
- le rapport de la distance (A) entre l'axe central respectif (21a, 21b) de la première bobine de réactance (19a) et de la deuxième bobine de réactance (19b) au diamètre (D) de la bobine de réactance est supérieur à 1,5 et inférieur à 1,8.

2. Dispositif de fermeture (7) selon la revendication 1, dans lequel la première bobine de réactance (19a) et la deuxième bobine de réactance (19b) sont disposées sur un côté intérieur du fond (8), qui est tourné vers le moteur électrique (5) .

3. Dispositif de fermeture (7) selon l'une des revendications précédentes,
dans lequel le dispositif de fermeture (7) comprend une matière plastique ou est constitué de ladite matière plastique.

4. Actionneur (1), comportant
- un moteur électrique à commutation mécanique (5),
- un carter (3), dans lequel le moteur électrique à commutation mécanique (5) est agencé au moins partiellement et qui présente une ouverture, et
- un dispositif de fermeture (7) selon l'une des revendications 1 à 3, qui est couplé mécaniquement au carter (3) de manière à ce qu'il ferme l'ouverture du carter (3), et dans lequel le moteur électrique à commutation mécanique (5) est couplé électriquement aux éléments de couplage (20a, 20b).
